(19)

Europäisches
Patentamt

European
Patent Office

Office européen
des brevets

(11) **EP 1 863 157 A1**

(12) **EUROPEAN PATENT APPLICATION**

(43) Date of publication:
**05.12.2007 Bulletin 2007/49**

(51) Int Cl.:
***H02M 3/156*** (2006.01)

(21) Application number: **06425370.1**

(22) Date of filing: **31.05.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Zafarana, Alessandro**<br>**20151 Milano (IT)** |
| | (74) Representative: **Ferrari, Barbara**<br>**Botti & Ferrari S.r.l.,**<br>**Via Locatelli, 5**<br>**20124 Milano (IT)** |
| (71) Applicant: **STMicroelectronics S.r.l.**<br>**20041 Agrate Brianza (Milano) (IT)** | |

(54) **Controller for DC-DC converters with by-pass compensation also for multi-phase applications**

(57) The invention relates a controller for DC-DC converters (4) with bypass compensation for applications stand alone or multi-phase mode, of the type associated with a half-bridge driving stage (7) of at least one inductive load (2) wherein a pair of power MOS transistors in Highside and Lowside configuration are driven in switching by means of a corresponding converter, the controller having an input connected to a terminal (A) of the inductive load and comprising:

a read block (6) of the phase current (Ic) of the inductive load (2) connected to the terminal (A);

an over current comparator (8) having an input connected to the output of the read block (6);

a bypass compensation network (11) incorporating an error amplifier block (5) having an input coupled to the terminal (A) by means of a voltage divider (3) and a second input coupled to a reference potential (Rref);

the compensation network having an output connected to a second input of the over current comparator (8) whose output is applied to the DC-DC converter (4).

FIG. 2

EP 1 863 157 A1

**Description**

<u>Field of application</u>

The present invention relates to a controller for DC-DC converters with bypass compensation which can be used in stand alone or multi-phase mode.

More specifically, the invention relates to a controller with bypass compensation for applications in stand alone or multi-phase mode, of the type associated with a driving half-bridge stage of at least one inductive load wherein a pair of power MOS transistors in Highside and Lowside configuration are driven in switching by means of a corresponding converter, the controller having an input connected to a terminal of said inductive load.

The invention particularly, but not exclusively, relates to a controller for switching converters of highside and lowside driver half-bridge stages and the following description is made with reference to this field of application by way of illustration only.

<u>Prior art</u>

As it is well known in this specific technical field, the evolution of the electric characteristics of the processors for PCs, of WORSTATIONs and of SERVERs obliges manufacturers to study new, more flexible and economic solutions for supplying various peripherals such as: DDR and DDRII memory banks, chipsets, graphic boards etc..

At present, the flexibility and cost criteria orient the research towards solutions capable of adapting to the different segments of use which are characterised by a variety of input supply voltages (buses of 12V, 5V and 3.3V are the most common) and of output supply voltages, for example: 2.5V, 1.25V for DDR memories; 1.8V and 0.9V for DDRII memories; 1.8V or 1.5V for the chipset; 1.7V-1.3V for the GPU processor of graphic boards.

Also the currents requested enormously vary especially for the different targets of use, such as for example: desktop of the performance, main stream and value type; Server High, low end etc.

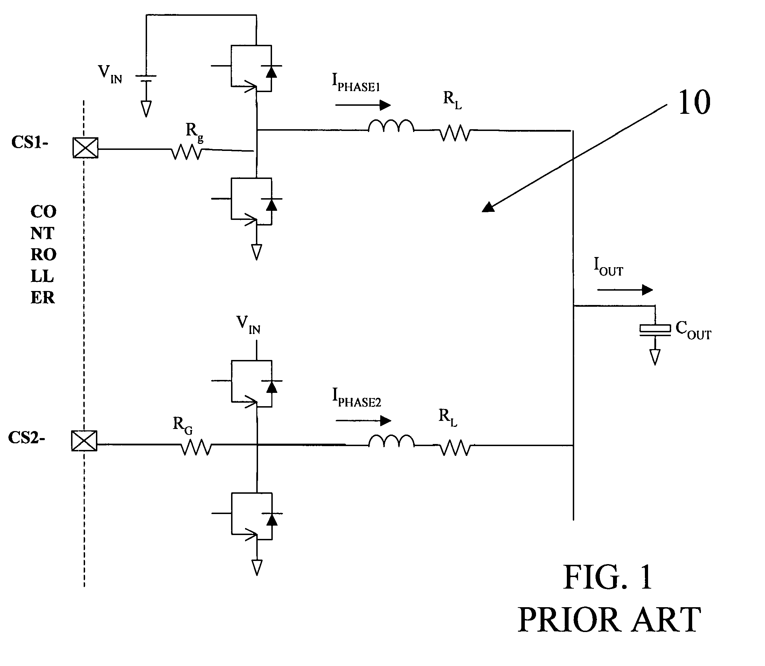

It is known that the most efficient and least expensive system for realising DC-DC converters of the high current switching type is the multi-phase system schematically shown in figure 1 wherein the current of each phase is generally set in a range 15 to 30A. For low current applications (< 15A) the single-phase switching converter is the most advantageous choice from the economic point of view.

A multi-phase converter of the known type uses a classical control system of the peak current mode type for each phase. The main advantage of a current mode system is due to the fact that, if each phase uses the same control method, when plural DC-DC converters are placed in parallel in multi-phase, the desired current sharing is obtained automatically saving valuable resources in terms of package pins and of occupied silicon area.

In fact, the choice of current mode systems seems to be even an unescapable choice.

Although advantageous under several aspects, these peak current mode systems show a so called load effect: i.e. when the output load (i.e. the current) varies, the output voltage will be set not at the desired regulation value but at a new value which diverging from the one set on the basis of the choice of some parameters, both internal and external, of the device.

In the supply systems of the CPU processors this effect is really desired and it is called, in the field jargon, droop or voltage positioning effect but the processor performances and reliability exactly depend on its accuracy.

However, for ensuring this desired purpose particular control techniques are necessary. Unfortunately, in current mode systems, as exactly the peak current mode, this load effect is not accurate at all and it cannot show a variance up to 50%.

If a DC-DC converter were designed with the purpose of minimising this effect, the resulting current sharing would be unsatisfactory when plural phases are associated in parallel.

Moreover, the peak current mode has the tie of a minimum working duty cycle D below which it cannot operate and which thus limits the range of applications since Vout = D x Vin.

It is still to be said that for reading the phase current it is necessary to use two pins (those connected across the inductance) and thus if there are plural phases in parallel the number of pins remarkably increases.

To limit the number of pins to a maximum of twenty-eight, the integrated drivers turn on and off the power MOS transistors of the highside driver type taking, as reference, not so much the phase nodes as directly the ground potential.

This operation saves two pins but is can be very dangerous since it can generate false non controlled turns-on of the power MOS transistors.

To summarise: the control systems with current mode DC-DC converters, in particular of the peak current mode type, show the following advantages:

- intrinsic current sharing;

- reading inductance current with a clean signal and continuous time;
  and the following disadvantages:

load effect;

minimum Duty Cycle;

two pins per phase to read the inductance current;

power MOS transistors referred to ground rather than to phase;

lack of a PGOOD signal.

A known technical solution already exists trying to overcome these drawbacks and being incorporated in a converter commercially known with the Intersil acronym ISL644x and being manufactured by Intersil.

In this device the problem of the load effect is overcome thanks to a control of the current mode type however not of the peak current mode type and the phase current is read thanks to the voltage fall on the power transistors of the Lowside and subsequently sampled by erasing the current ripple.

In this way, a single pin (the phase one) is enough for reading the current on the Lowside, which is measured with respect to the ground of the controller rather than on the source terminal of the Lowside.

The problem of this known device is given by the fact that, due to the lack of pins, the compensation network is integrated and the switching frequency is not programmable. Therefore, the researched flexibility is substantially lost in the resulting lack of package resources.

Moreover, the use of the information of the current taken from the voltage fall across the Lowside implies that these information are sampled (in the track&hold mode) when the Lowside is turned on and maintained when the Lowside is turned off. This eliminates, or strongly reduces, the current ripple, but, being the power drivers integrated in the same device, there is the risk that the beginning of the hold of the current information already sampled (hold) occurs in correspondence with a transition of the driver (usually also drivers of the remaining phases). The hold of the information temporarily stores switch noise and generates a malfunction of the whole system called crossnoise.

Therefore, the solution currently proposed by the prior art shows the following drawbacks:

inner and little flexible compensation network;

maximum duty cycle limited at 70% to ensure the reading of the current on Lowside;

non programmable switching frequency;

inner cross noise.

For completing the description, a second prior art solution is to be indicated known as NCP5425 controller of the On Semiconductor which integrates two voltage-mode controllers and realises the current sharing by using the error amplifier of a second controller, whose pins are all available.

This technique allows to manage the current sharing but not to program the distribution of the currents in the phases unless different sense resistances are available.

The current reading occurs on the inductance and not on the Lowside power transistors. This makes the circuitry necessary for preventing crossnoise problems and for sampling the signal superfluous.

However, the main fault of this controller is made by the drivers, which supply only 4V at the maximum driving for applications with Vin of 12V; moreover, power Highside driver transistors are driven towards the device ground, which is unique and in common both for the analogue and power part.

The technical problem underlying the present invention is that of devising a single controller for DC-DC converters, which can be used in multi-phase applications, having such structural and functional characteristics as to allow to operate in current mode, and in particular of a peak current mode type, however overcoming the limits and/or the drawbacks affecting the devices realised according to the prior art.

Summary of the invention

The solution idea underlying the present invention is that of realising single DC-DC converters of the switching type, each one with its own controller and each one operating with all the usual supply buses employed in this kind of applications, which can be associated together in a multi-phase structure which can ensure both the current sharing and the interleaving. Each single DC-DC converter thus structured can find its field of application also by operating in stand-alone mode.

On the basis of this solution idea the technical problem is solved by a controller as previously indicated and defined by the characterising part of claim 1.

The characteristics and the advantages of the controller according to the invention will be apparent from the following description of an embodiment thereof given by way of indicative and non limiting example with reference to the annexed drawings.

Brief description of the drawings

In these drawings:

- Figure 1 shows a schematic view of a pair of inductive loads driven by respective output pins of a DC-DC converter device equipped with a controller according to the prior art;

- Figure 2 shows a schematic view of a controller realised according to the invention for a DC-DC converter and, in particular, for allowing multi-phase applications;

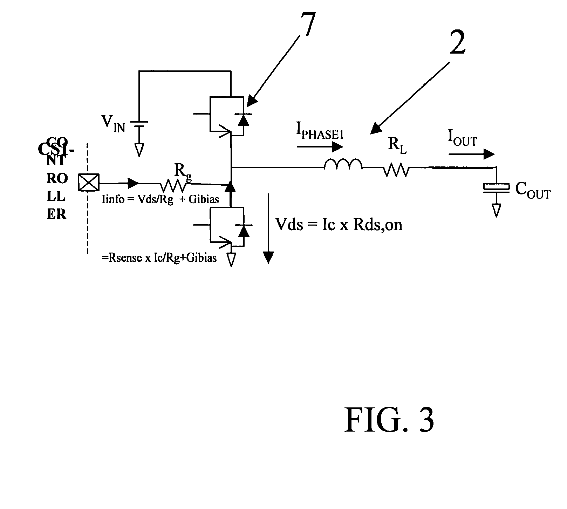

- Figure 3 shows a schematic view of an operative mode of the controller of Figure 2;

- Figure 4 shows a diagram as a function of the time in which some voltage values present in various circuit nodes of the controller of Figure 2 are reported;

- Figures 5 to 8 are graphics and diagrams reporting simulation results for the controller according to the invention.

Detailed description

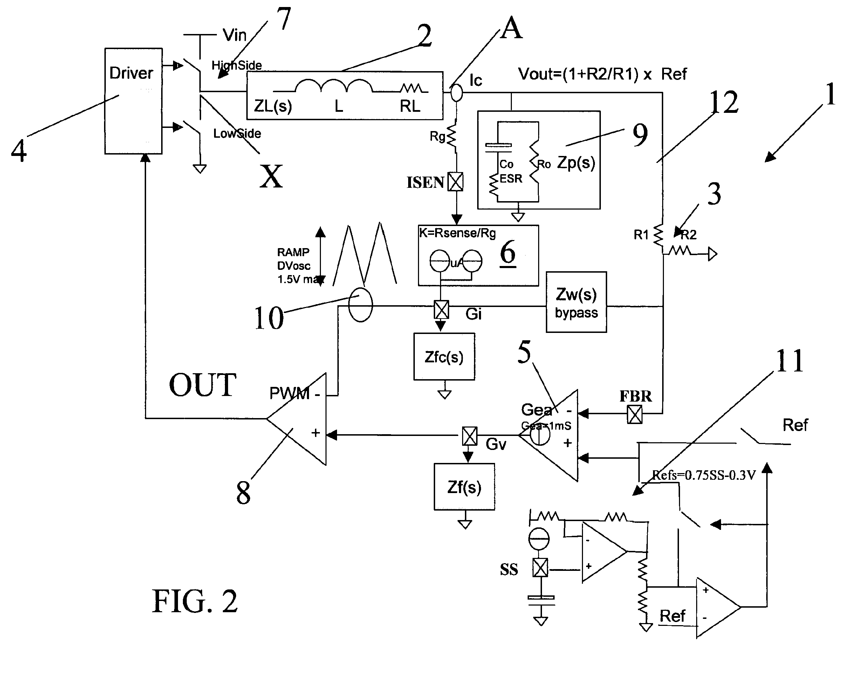

With reference to these figures, and in particular to the example of figure 2, 1 globally and schematically indicates a controller for DC-DC converters which can be advantageously used for multi-phase applications by associating in parallel plural controllers of the same type.

The controller 1 has been expressly provided according to the present invention with a bypass compensation network 11.

The controller 1 is associated with a DC-DC converter indicated by the driving block 4 which acts on a power structure 7 formed by a half-bridge stage of power MOS transistors comprising a Highside and a Lowside. The interconnection node X between the Highside and Lowside portions is connected to a terminal of an inductive load 2 which represents the phase to be driven. The load 2 is schematically indicated in figure 2 with an circuit LR comprising an inductance L and a resistance RL. Globally, the impedance of this load is indicated with ZL(s).

The opposed terminal of the load 2 is indicated as node A and represents the point in which the phase current Ic (coil current) is drawn from the controller 1. In substance, the node A represents an input for the controller 1.

For this purpose, the controller 1 comprises a read block 6 of the phase current Ic which is characterised by a gain K=Rsense/Rg. A resistance Rsense is provided for the reading of said current Ic and it is substantially the resistance Rds,on of the power MOS transistor of the Lowside 7.

A resistance Rg is inserted between the node A and the block 6 and it is the resistance with which the voltage across the transistor Rds,on of the Lowside is transformed into current.

Between the output of the read block 6, node Gi, and the converter 4 an oscillator 10 and an Over Current comparator 8 with two inputs, which will be described hereafter, are inserted in series. The inverting input of the comparator 8 receives the signal from the node Gi, while the other non inverting input receives the signal from an output node Gv of the compensation network 11.

Between the node Gi and a ground potential GND an impedance Zfc(s) is provided. The inner information of the current are summed to a reference current of 50uA called Gibias.

A circuit mesh 9 with RCR components is connected between the node A and the read block 6 substantially in parallel to the resistance Rg. This mesh 9 globally has an impedance Zp(s).

A further connection 12 is provided between the node A and the node Gi. On this connection 12 a voltage divider 3 and a by-pass impedance Zw(s) are inserted.

The impedances ZL(s) and Zp(s) are in reality part of the DC-DC converter. These impedances, together with the switching frequency, are chosen by the user according to several considerations: efficiency, response speed, precision, etc.

For example, the impedances Zfc and Zw are chosen so as to ensure the performances on the basis of the controller-converter system.

The divider 3, comprising the resistances R1/R2, has the purpose of amplifying the reference potential of the controller Ref and thus of determining, with accuracy, the desired value of the output OUT.

The reference potential Ref of the compensation network 11 can be for example chosen as Ref=0.7V and it represents the minimum adjustable voltage. Other values could be used as well.

In the compensation network 11 a block 5 is provided, also indicated with the acronym Gea, which represents an Error Amplifier common for most of the regulation systems of the switching type; however, differently from the usual Error Amplifiers comprising operational amplifiers which operate in feedback, this block 5 is a simple transducer; i.e. it transforms, with open loop and without feedback, the voltage difference at its inputs (Ref-FBR) into a current through the gain Gea.

In the embodiment here described by way of mere indicative and non limiting example this gain can be equal to 1mS.

In the regulation area of the output voltage (+/-10%), the transducer must maintain its gain; thus, referring to the maximum output of 3.3V, it is necessary that for about +/-300mV of |Ref- FBR| the gain remains constant.

The node Gv at the output of the block 5 is connected to an input of the Over Current comparator 8 and also towards ground through a compensation impedance Zf(s).

Not to influence the compensation impedance Zf, it is necessary that the Gea output resistance (Ro) is very high, at least 100Mohm; this output resistance must be maintained at least in the operation range +/-300mV of |Ref-FBR|.

When the current of the inductance L increases up to its highest value (Iocp), the signal inner current equal to Ic x K reaches a highest current Ilim (equal for example to 100uA), then the Over Current comparator 8 is released and forces the power MOS transistor of the Lowside 7 to remain off until the Over Current signal disappears.

By detecting the current signal from the power MOS transistor of the Lowside 7, it is necessary to sample the voltage signal across the component. The sampling (TRACK) and maintenance (HOLD) time intervals of the information must be accurately chosen so as to avoid that the beginning of the HOLD phase occurs in correspondence with a switch of any power MOS transistor of the structure 7.

Hereafter how these intervals are chosen will be explained.

The node GI at the output of the read block 6 represents in voltage the basement whereon the triangular ramp PWM of the oscillator 10 (of height Dvosc) develops.

This basement is not constant but suffers from the operation conditions of the system. If in the DC-DC converter 4 there is an increase of the current of the inductance L, then the signal Ic x K reproduces it and thanks to the impedance Zcc it generates an increase of the voltage level GI, in practice it shifts up the ramp PWM.

For the correct operation of the controller 1 it is necessary to be sure that the device supply guarantees the space for the movement of the node GI. If Vdd is the inner supply of the device and Vdrop is the space in voltage from the ground or Vd necessary so that the circuits operate correctly, it results:

$$Rcc := \frac{Vdd - Vdrop - DVosc}{Gibias + Ilim}$$

Moreover Rcc x Gibias > Vdrop

Where Rcc is the value of Zcc at void frequency, i.e. continuous.

Typical values of Vdd=5V with Vdrop=0.5V; or Vdd=3.5V with Vdrop=0.25V

To ensure the operation of the system and the Over Current protection 8 it is necessary to ensure that at each cycle the current of the MOD transistor of the Lowside is updated. It is thus necessary to limit the maximum dutycycle at about 80% (loadless dutyclamp) so as to ensure an even small turn-on interval of the Lowside.

To generate the digital signal with an 80% constant duty cycle it is necessary to generate a threshold referred to the node Gi. The comparator 8 will compare this threshold with the signal of the ramp PWM to produce the desired signal.

When the system is pushed to the maximum possible current (over current), the current of the inductance ZL would show an excessive ripple if there were only the loadless dutyclamp; this would shift up the value of the maximum suppliable current with respect to the programmed value.

In fact, in current protection with L=350nH, Vin=12V; Fsw=500KHz, the inductance current ripple would be: Vin x 0.8 / (L Fsw) = 54A. It is thus necessary that when the current increases the dutyclamp decreases.

Exactly for this purpose, the DCLAMP pin allows to program a voltage Vdc which is compared with the clamp - of the comparator 8 PWM.

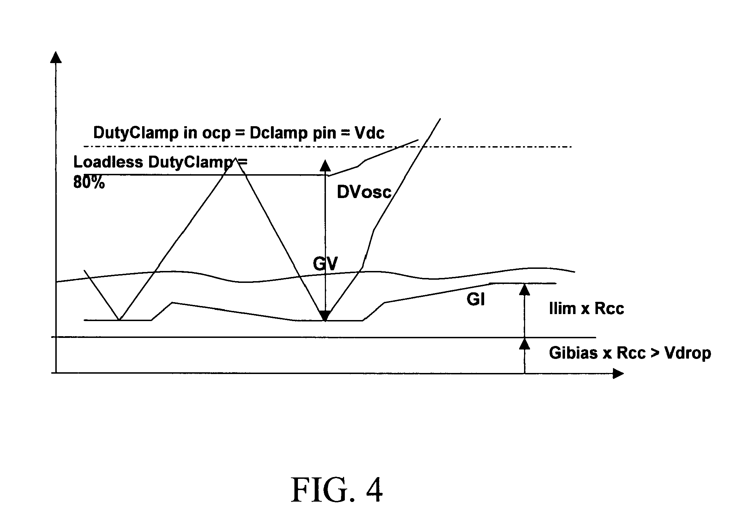

Figure 4 shows that when the current increases, the node Gi enhances making the ramp intersect with the voltage Vdc. The full load dutyclamp (DutyClampFull) is obtained from:

$$DutyClampFull := \frac{Vdc - IlimRcc - Gibias \cdot Rcc}{DVosc}$$

The comparator 8 PWM compares the signal Gi to which the ramp PWM has been summed with the signal Gv. The comparison generates the square wave PWM whose digital value "1" commands the driver 4 to turn on the power MOS transistor of the Highside 7 and to turn off the Lowside, or vice versa.

The ramp PWM is generated without having, as reference, a constant voltage while having, as reference, the signal Gi.

Each phase is characterised by a ramp generated in this way; each one results to be offset with respect to the other by a time delay equal to the period divided by the number of phases (interleaving, for two phases the phase displacement is equal to half the period).

To verify the correct operation of the controller 1 reference has been made to all the possible ways to connect two DC-DC converters.

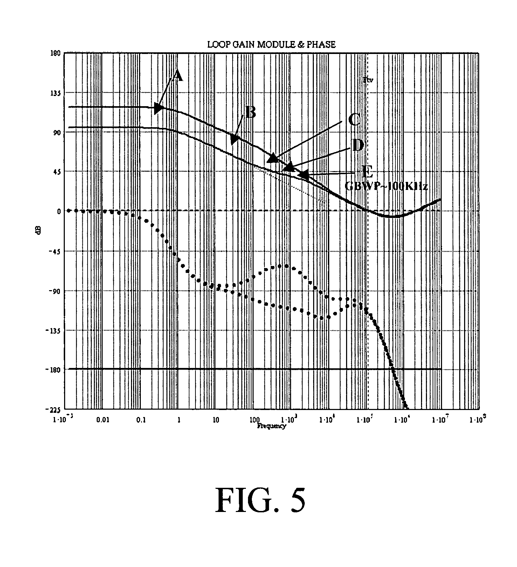

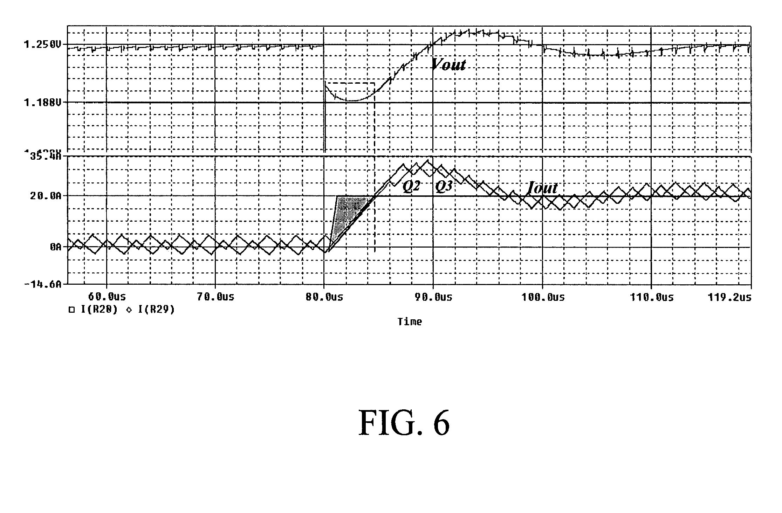

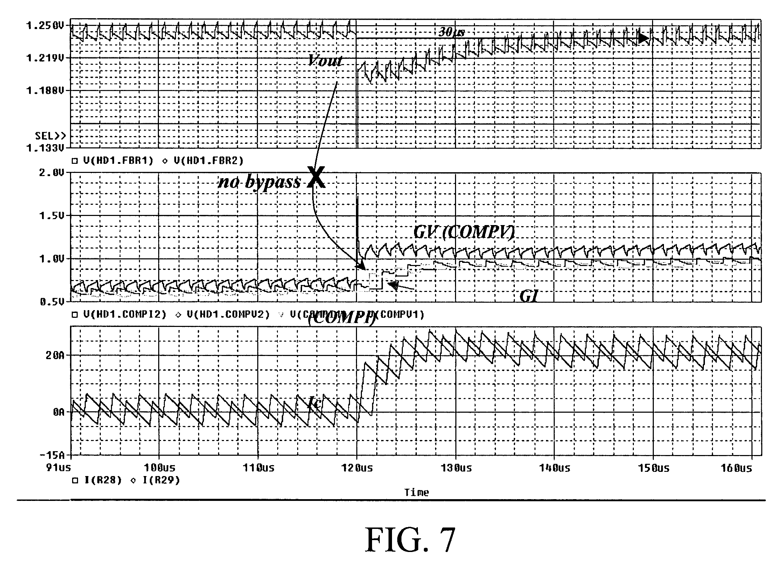

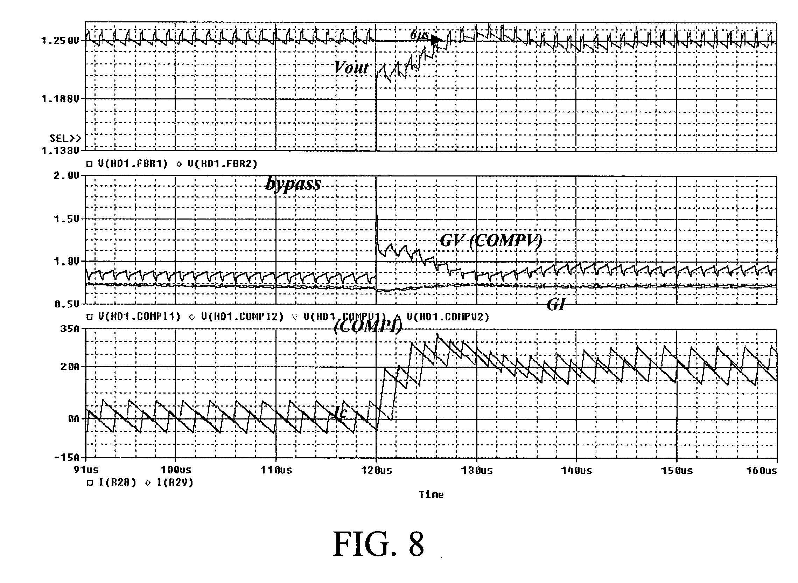

The diagrams, the figures and the simulations of figures 5 to 8 refer to this type of application.

<u>"stand alone" use</u>

By mere way of example a single phase application can be considered as characterised by the following parameters:

L = 350nH                         inductance of ZL

RL=1mOhm                      resistive value of ZL

Fsw=500KHz                    switching frequency
                                          Cout = 2 x (560uF with ESR=6mOhm and ESL=2nH)

HighSide/Lowside =         with Rdson=Rsense=5mOhm

Vout=1.25V                      nominal output voltage

Iocp=25A                         overcurrent protection

Vin = 3.3V - 12V              input voltages

Iout = 20A                        with dI/dt = 20A/ 100ns

Np=1-2                            number of interleaving phases

While as inner parameters of the controller we can choose:

Ilim=100uA          threshold Overcurrent comparator allows to calculate Rg from Iocp

Gibias=50uA        reference current necessary for calculating Rcc and Rc

Dvosc=1.5V         height ramp PWM necessary for calculating Zf, Zcc

Vdd=3.5V            inner supply device necessary for calculating Rcc and Rc

Vdrop=0.25V        inner voltage of the device necessary for calculating Rcc and Rc

The current information of the phase Ic is transformed into voltage thanks to the resistance highlighted in red (Vc) and drawn at the output of the Error amplifier 5. This realises a current mode system (thus with intrinsic current sharing) but does not generate load effect since when the load changes Vc increases, Vc is divided by an enormous gain of the error amplifier for being brought back onto the node of the output voltage; then, it does not produce variations of the regulated voltage.

In this configuration Vin each bus supplies its relative output voltage with power.

Multi-phase

In this configuration the Vin bus supplies the output voltages connected in multi-phase interleaving with power.

Power division

In this configuration both the Vin buses supply the single output voltage the DC-DC converters, connected in multi-phase interleaving, refer to with current.

The powers absorbed by the Vin can be equalised or a determined amount of power can be programmed.

GloopV calculation

Retaking the equation (4) it is possible to calculate the overall loop gain Vout/Vs.

$$\frac{\text{Vout}}{\text{P·Zp(s)}} \cdot (\text{Zp(s)} + \text{ZL(s)})(1 - \text{GloopI}) := -\text{Gea·Vs·Zf(s)} - \frac{\text{Vs·Zfcw(s)}}{\text{Zw(s)}} \qquad \text{eq (4)}$$

$$\frac{\text{Vout}}{\text{Vs}} := -\text{P·Zp(s)} \cdot \frac{\text{Gea·Zf(s)} + \dfrac{\text{Zfcw(s)}}{\text{Zw(s)}}}{1 - \text{GloopI}} \cdot \frac{\text{Zf(s)}}{\text{Zp(s)} + \text{ZL(s)}}$$

$$\text{GloopV(s, Ro)} := \frac{-\left[\text{Zp(s, Ro)·P·Gea·Zf(s)·}\left(1 + \dfrac{\text{Zfcw(s)}}{\text{Zw(s) Gea·Zf(s)}}\right)\right]}{\text{Zp(s, Ro)} + \text{ZL(s)}} \cdot \frac{\left[1 - s·\dfrac{1}{(6.28\,\text{Fsw})}\right]^2}{(1 - \text{GloopI\_calc(s, Ro)})}$$

$$\text{Gbypass (s)} := \left(1 + \frac{\text{Zfcw(s)}}{\text{Zw(s) Gea·Zf(s)}}\right)$$

In GloopV the singularities have been inserted which take into account the high frequency sampling effect; moreover, the sole terms depending, in an explicit way, on Zw, i.e. G-bypass, has been collected.

It is immediately understood that the term Gea x Zf(s) is a very big term thereby G-bypass remains equal to 1 (0 dB), i.e. it does not affect the study of the system stability.

If GloopI owns a GBWP greater than GloopV, it remains in greater module than the unit an it is thus possible in GloopV to substitute 1-GloopI only for GloopI. In this way the GloopV resonance (Zp+ZL) is erased by GloopI, and GloopV is dominated by Zpx(GeaZf)/Zfcw.

Not having load effect (droop) means having a very high gain of the error amplifier 5. It means that the GloopV represents an integrator.

The integrator is exactly given by the impedance Zf; at mean frequency Zf it stops integrating thanks to its zero frequency at ~100Hz (see B); this zero is followed by the singularities of 1/Zfcw i.e. a zero ~1KHz (see C) and a pole at ~10KHz (see E); the zero at 1KHz does not change the characteristics since it is compensated by the pole of Zp (due to the output load) in (see D); only one pole thus remains which ensures a very high phase margin and with it the stability.

Response to the transistors

Let's then see an example of how the bypass acts in transient.

In a voltage mode system, even if the compensation network ensures the high gain with low frequency necessary not to have load effect (one pole) and the compensation network introduces the two zeroes necessary for contrasting the loss of the phase margin due to the resonance of the output filter (Zp+ZL, with two conjugated complex poles), it is impossible not to have over-elongations in response to the load.

This occurs since the slope with which the inductance current increases is however much lower with respect to the load slope.

Having to bring the output voltage (above) to its original value, a current overshoot is necessary for equalising the charges Q1 with Q2; at this point, the inductance current, also having to be brought to its final value (coinciding with Io), forces the Vout to an over-elongation (Q3). This behaviour corresponds, in the space of the frequencies, to the presence, however, of the output filter resonance.

In the current mode systems as the one of the present invention this does not occur and, as previously seen, the GloopV resonance is not present.

In fact, in the current mode without bypass, the duty cycle increase is controlled by the jump performed by GV. The modulator thus increases the dutycyle and thus the current flowing in the inductances increases. Further to this increase, GI enhances and, with it, the ramps PWM enhance. These slow the increase of the dutycycle controlled by GV and, lastly, they prevent the over-elongations.

However, the response times in the transistors are longer than in the voltage mode regulation systems. It is thus important to increase, as much as possible, the GBWP of GloopV. The bypass compensation is suitably provided for this purpose.

The response times halve. Now the Vout fall is transmitted through the impedance Zw directly to GI which, before slowing the increase of the dutycycle controlled by GV, must wait for the coupling with Vout ends.

In other words, the Vout fall further to the load variation is transmitted to the control of the PWM directly (on GI) outperforming (bypass) the error amplifier 5.

The device according to the invention solves the technical problem in an efficient and economic way.

This also allows to face a great variety of applications wherein it is necessary to manage different currents by applying all the known advantages of the interleaving (cost decrease of the input and output capacities, increase of the efficiency etc.).

When the currents are low, each controller 1 will regulate its output voltage. The concept extends to a generic number of phases (or to a generic number of DC-DC converters) thanks to the innovative sampling system (track&hold) of the phase current read through the Rdson of the MOS transistor of the Lowside.

The bypass compensation technique optimises the system response to the load variations reducing the recovery times.

A user will be allowed to:

> separately enable the phases by programming, for each, the softstart, the overcurrent threshold, the output voltage;

> for each phase there will be the protection of overvoltage, feedback disconnection and the PGOOD;

> management of the softstart with the pre-charged output;

> making the phases operate in parallel, i.e. interleaving multiphase deciding to program the division of the currents between the two phases;

> during the two-phase operation disable a phase for energetic saving and enable it again when necessary without losing the output control;

> in the two-phase operation divide the power required by the load by different supply buses by programming, for each one, a power amount.

**Claims**

**1.** Controller for DC-DC converters (4) with bypass compensation for stand alone or multi-phase mode applications,

EP 1 863 157 A1

of the type associated with a half-bridge driving stage (7) of at least one inductive load (2) wherein a pair of power MOS transistors in Highside and Lowside configuration are driven in switching by means of a corresponding converter, the controller having an input connected to a terminal (A) of said inductive load, **characterised in that** it comprises:

a read block (6) of the inductive load (2) phase current (Ic) connected to said terminal (A);
an over current comparator (8) having an input connected to the output of said read block (6);
a bypass compensation network (11) incorporating an error amplifier block (5) having an input coupled to said terminal (A) by means of a voltage divider (3) and a second input coupled to a reference potential (Rref);
said compensation network having an output connected to a second input of said over current comparator (8) whose output is applied to said DC-DC converter (4).

2. Controller according to claim 1, **characterised in that** said read block (6) comprises a resistance Rsense for reading said phase current (Ic) which corresponds to the inner resistance in the on state (Rds,on) of the power MOS transistor of the Lowside of said stage (7).

3. Controller according to claim 1, **characterised in that** said Error Amplifier block (5) is a simple transducer and transforms, with open loop, the voltage difference (Ref-FBR) at its inputs into a current through a predetermined gain (Gea).

4. Controller according to claim 3, **characterised in that** said transducer (5) holds its gain constant in a range of +/- 10% the voltage difference (Ref-FBR) at its inputs.

5. Controller according to claim 4, **characterised in that** said transducer has an output resistance (Ro) relatively high and at least of 100Mohm.

6. Controller according to claim 1, **characterised in that** between said read block and the input of said over current comparator (8) there is an oscillator (10).

7. Controller according to claim 1, **characterised in that** it comprises a bypass impedance (Zw(s)) between said voltage divider (3) and the output of said read block (6).

8. Controller according to claim 1, **characterised in that** both the inputs of said over current comparator (8) are connected towards ground through respective compensation impedances (Zfc(s); Zf(s)).

9. Controller according to claim 1, **characterised in that** it comprises a mesh RCR (9) connected in parallel to said read block (6).

9

FIG. 1
PRIOR ART

FIG. 2

EP 1 863 157 A1

FIG. 3

DutyClamp in ocp = Dclamp pin = Vdc

Loadless DutyClamp = 80%

DVosc

GV

GI

Ilim x Rcc

Gibias x Rcc > Vdrop

FIG. 4

LOOP GAIN MODULE & PHASE

GBWP=100KHz

FIG. 5

FIG. 6

EP 1 863 157 A1

1.250V
1.219V
1.188V

SEL>>
1.133V
□ U(HD1.FBR1)  ◇ U(HD1.FBR2)

*30µs*

*Vout*

2.0V

*no bypass* **X**

1.5U

*GV (COMPV)*

1.0U

*GI*

0.5U
□ U(HD1.COMPI2)  ◇ U(HD1.COMPU2)  ▽ U(CAMP0W*PI*COMPU1)
*(COMPI)*

20A

*Ic*

0A

-15A
91us      100us      110us      120us      130us      140us      150us      160us
□ I(R28)  ◇ I(R29)

Time

## FIG. 7

FIG. 8

EP 1 863 157 A1

**European Patent Office**

# EUROPEAN SEARCH REPORT

Application Number

EP 06 42 5370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 367 703 A (ST MICROELECTRONICS SRL [IT]) 3 December 2003 (2003-12-03) | 1,3-5 | INV. H02M3/156 |
| Y | * abstract; figure 4 * | 2,6-8 | |
| X | EP 1 519 474 A (INTERSIL INC [US]) 30 March 2005 (2005-03-30) | 1,6 | |
| Y | * abstract; figure 3 * | 6 | |
| Y | WO 03/017455 A2 (INTERSIL INC [US]; WALTERS MICHAEL M [US]; HARRIS MATTHEW B [US]; DUDU) 27 February 2003 (2003-02-27) | 2 | |
| A | * page 11, line 12 - page 12, line 4; figures 1,2 * | 9 | |
| X | EP 1 650 858 A (ST MICROELECTRONICS SRL [IT]) 26 April 2006 (2006-04-26) * abstract; figures 1,2 * | 1 | |
| Y | US 7 019 503 B1 (ORTIZ JOE A [US] ET AL) 28 March 2006 (2006-03-28) * column 5, lines 17-58; figure 2 * | 7 | TECHNICAL FIELDS SEARCHED (IPC) |
| Y | US 6 181 120 B1 (HAWKES CHARLES E [US] ET AL) 30 January 2001 (2001-01-30) * column 4, lines 36-47; figures 2,3 * | 8 | H02M |

The present search report has been drawn up for all claims

| Place of search | Date of completion of the search | Examiner |
|---|---|---|
| The Hague | 22 June 2007 | Imbernon, Lisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 42 5370

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**LACK OF UNITY OF INVENTION
SHEET B**

The Search Division considers that the present European patent application does not comply with the requirements of unity of invention and relates to several inventions or groups of inventions, namely:

1. claims: 1-6,9

    Controller with a specific inductor current read block improving the current sensing
    ---

2. claims: 7,8

    Controller with compensation and bypass compensation impedances so as to improve the transient response of the system
    ---

**ANNEX TO THE EUROPEAN SEARCH REPORT
ON EUROPEAN PATENT APPLICATION NO.**

EP 06 42 5370

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2007

| Patent document cited in search report | | Publication date | Patent family member(s) | | Publication date |
|---|---|---|---|---|---|
| EP 1367703 | A | 03-12-2003 | US | 2004032242 A1 | 19-02-2004 |
| EP 1519474 | A | 30-03-2005 | CN | 1603996 A | 06-04-2005 |
| | | | JP | 3919116 B2 | 23-05-2007 |
| | | | JP | 2005124389 A | 12-05-2005 |
| | | | KR | 20050031382 A | 06-04-2005 |
| WO 03017455 | A2 | 27-02-2003 | CN | 1555600 A | 15-12-2004 |
| | | | EP | 1419570 A2 | 19-05-2004 |
| | | | JP | 2005500795 T | 06-01-2005 |
| | | | TW | 578359 B | 01-03-2004 |
| | | | US | 2003038614 A1 | 27-02-2003 |
| | | | US | 2004178779 A1 | 16-09-2004 |
| | | | US | 2004217744 A1 | 04-11-2004 |
| EP 1650858 | A | 26-04-2006 | US | 2006087296 A1 | 27-04-2006 |
| US 7019503 | B1 | 28-03-2006 | WO | 2006086088 A2 | 17-08-2006 |
| US 6181120 | B1 | 30-01-2001 | US | RE38906 E1 | 06-12-2005 |

EPO FORM P0459